# FASCICULE DE BREVET EUROPEEN

(11) **EP 3 753 065 B1**
(45) Date de publication et mention de la délivrance du brevet: **04.05.2022**
(21) Numéro de dépôt: 19720942.2
(22) Date de dépôt: 27.03.2019
(51) Int. Cl.: H01M 50/20, H01M 50/256, H01M 10/613, H01M 10/625, H01M 10/647, H01M 10/6556, H01M 10/6567

(54) **SYSTÈME DE REFROIDISSEMENT DE CELLULES DE BATTERIE DE VÉHICULE AUTOMOBILE**
SYSTEM ZUR KÜHLUNG VON BATTERIEZELLEN FÜR KRAFTFAHRZEUGE
SYSTEM FOR COOLING MOTOR VEHICLE BATTERY CELLS

(30) Priorité: 27.03.2018 FR 1852650
(43) Date de publication de la demande: 23.12.2020
(73) Titulaire: Valeo Systemes Thermiques-THS, 78322 Le Mesnil Saint Denis Cedex (FR)
(72) Inventeur: JOVET, Bastien, 78322 LE MESNIL SAINT DENIS CEDEX (FR); PERRIN, Thibaut, 72210 LA SUZE SUR SARTHE (FR); VERON, Julien, 72210 LA SUZE SUR SARTHE (FR)
(74) Mandataire: Valeo Systèmes Thermiques
(86) Numéro de dépôt international: PCT/FR2019/050697
(87) Numéro de publication internationale: WO 2019/186061

(56) Documents cités:
- DE-A1-102014 200 877
- DE-A1-102015 216 029
- DE-T5-112015 002 995
- US-A1- 2015 255 837

## Description

La présente invention concerne un système de refroidissement d'au moins une batterie ou cellules de batterie de véhicule automobile.

L'invention est notamment applicable pour toutes les automobiles électriques ou hybrides avec un pack de batteries ou cellules de batterie.

Les demandes de brevet US2017176108, DE102015216029 et WO 2013056938 décrivent des échangeurs de chaleur pour refroidir des cellules de batterie.

Lors d'une phase de charge rapide du dispositif de stockage électrique ou cellules de batterie, qui consiste à charger le dispositif de stockage électrique sous une tension et un ampérage élevés, de manière à charger le dispositif de stockage électrique en un temps maximum de quelques dizaines de minutes. Cette charge rapide implique un échauffement du dispositif de stockage électrique qu'il convient de traiter.

Lors de la charge rapide, la puissance dégagée par la batterie est très importante, il s'agit du point dimensionnant pour le système. Pour extraire cette puissance thermique, le plus souvent comprise entre 10 et 20kW, il faut augmenter les surfaces d'échanges entre un fluide caloporteur et les cellules électriques.

Habituellement on retrouve une plaque froide, traversée par un fluide caloporteur, située sous le module.

L'invention a ainsi pour objet un système de refroidissement pour module de stockage d'énergie électrique, ce système comportant :
- un logement agencé pour loger un module de stockage d'énergie électrique comprenant une ou plusieurs cellules de batterie, ce logement comprenant une face de fond et au moins une face latérale notamment sensiblement perpendiculaire à la face de fond, de préférence ces faces se raccordant l'une à l'autre,
- un circuit interne de fluide caloporteur comprenant au moins deux plaques de refroidissement dans lesquelles peut circuler le fluide caloporteur, chacune de ces plaques étant en contact thermique respectivement avec l'une desdites faces du logement de manière à refroidir le module de stockage lorsque celui-ci est placé dans le logement,
- un raccord de fluide agencé pour raccorder le circuit interne de fluide caloporteur à un circuit de fluide caloporteur extérieur au système de refroidissement,
- un organe structurel agencé pour réaliser une fonction mécanique, notamment l'organe structurel étant agencé pour permettre la préhension du dispositif lors d'une manipulation de ce dispositif ou étant agencé pour permettre la fixation du dispositif sur le véhicule, cet organe structurel étant distinct des plaques de refroidissement,
système dans lequel le raccord de fluide est monté sur cet élément structurel, notamment le raccord de fluide fait partie intégrante de cet élément structurel.

La présente invention propose ainsi notamment de refroidir, en plus de la partie inférieure du module, l'une au moins des deux faces latérales du module. Un autre avantage de l'invention est aussi d'intégrer la distribution du fluide caloporteur dans l'un au moins des organes structurels du module, afin de conserver, le cas échéant, qu'une seule entrée et sortie du fluide caloporteur formées par des raccords, avec les surfaces d'échange.

Autrement dit l'invention permet notamment d'augmenter les surfaces d'échange entre le fluide caloporteur et les cellules en proposant plusieurs échangeurs thermiques, formés par des plaques, agencés par exemple en forme de « U ». Aussi, pour ne pas complexifier la circulation du fluide caloporteur et multiplier le nombre d'entrée et sortie du fluide, cette invention propose de les intégrer directement dans au moins un organe structurel notamment d'extrémité du module de cellule. De préférence, pour le fluide, on ne conserve qu'une seule entrée et une seule sortie par module.

Selon un aspect de l'invention, le système comporte le module de stockage d'énergie électrique, et le module de stockage comporte un boitier agencé pour recevoir le ou les cellules de batterie et lesdites faces de fond et latérale correspondent respectivement à une face de fond et une face latérale de ce boitier.

Selon un aspect de l'invention, le boitier est réalisé en matériau métallique, notamment de l'aluminium.

Selon un aspect de l'invention, le boîtier peut être formé par des parois assemblées.

Selon un aspect de l'invention, les plaques de refroidissement du circuit de refroidissement sont au contact directement d'au moins une région d'une ou plusieurs cellules de batterie lorsque le module de stockage d'énergie électrique est placé dans ledit logement. Dans ce cas, le module ne comporte pas de boitier pour les cellules de batterie.

Selon un aspect de l'invention, les plaques de refroidissement du circuit de refroidissement sont agencées pour participer au maintien mécanique des cellules du module, notamment dans le cas ou les cellules ne sont pas maintenues dans un boitier dédié.

Selon un aspect de l'invention, le circuit interne de fluide caloporteur comprend au moins trois plaques de refroidissement, notamment exactement trois plaques, dans lesquelles peut circuler le fluide caloporteur, chacune de ces plaques étant en contact respectivement avec l'une des faces du module.

Selon un aspect de l'invention, l'une de ces plaques de refroidissement est la plaque de fond et les deux autres plaques sont sur deux faces opposées du module de sorte que les trois plaques sont disposées en U.

Selon un aspect de l'invention, lorsqu'il est considéré le sens de l'écoulement du fluide caloporteur dans le circuit, les deux plaques latérales sont disposées en amont de la plaque de fond.

Selon un aspect de l'invention, les deux plaques latérales sont disposées en parallèle, à savoir, lors de la circulation de fluide, le fluide caloporteur amené par un canal commun est séparé dans les deux plaques.

Selon un aspect de l'invention, lorsqu'il est considéré le sens de l'écoulement du fluide caloporteur dans le circuit, la plaque de fond est disposée en série en aval des deux plaques latérales.

Selon un aspect de l'invention, les plaques de refroidissent sont distinctes les unes des autres, à savoir elles sont réalisées de manière séparée.

Selon un aspect de l'invention, le ou les plaques comportent chacune une paroi plane venant au contact du module de stockage d'énergie.

Selon un aspect de l'invention, le ou les plaques comportent une paroi avec des aspérités agencées pour perturber l'écoulement de fluide au sein de la plaque.

Selon un aspect de l'invention, les plaques communiquent fluidiquement entre elles par l'intermédiaire d'un ou plusieurs canaux intermédiaires.

Selon un aspect de l'invention, ce ou ces canaux intermédiaires sont formés sur l'organe structurel.

Selon un aspect de l'invention, le dispositif comporte deux organes structurels sur deux faces opposées du module, chaque organe structurel comprenant un ou plusieurs canaux intermédiaires, notamment ces deux organes structurels sont identiques, notamment pour réduire la diversité des composants.

Selon un aspect de l'invention, les organes structurels sont fixés sur des faces du module qui sont libres de plaque de refroidissement, à savoir des faces sans plaques de refroidissement.

Selon un aspect de l'invention, l'un au moins des organes structurels comporte un canal d'entrée communiquant à une extrémité avec un raccord et se divisant à l'autre extrémité en deux canaux qui débouchent chacun sur une plaque de refroidissement latérale.

Selon un aspect de l'invention, les plaques de refroidissement communiquent entre elles par l'intermédiaire de canaux formés sur ces organes structurels.

Selon un aspect de l'invention, l'un au moins des organes structurels comporte deux canaux provenant chacun d'une plaque latérale, canaux qui se raccordent à un canal commun qui débouche sur la plaque de fond.

Selon un aspect de l'invention, le circuit interne de fluide caloporteur comporte un seul raccord d'entrée et un seul raccord de sortie.

Selon un aspect de l'invention, l'organe structurel comporte au moins passage de vis ou tirant pour mettre la fixation du dispositif sur le véhicule.

Selon un aspect de l'invention, l'organe structurel comporte un bloc usiné.

Selon un aspect de l'invention, le cas échéant, les plaques ne sont pas liées mécaniquement entre elles directement, mais notamment sont fixées au boitier qui contient les cellules de batterie.

Selon un aspect de l'invention, l'organe structurel présente une superficie inférieure à la plaque de refroidissement, notamment au moins deux fois inférieure.

Selon un aspect de l'invention, le raccord d'entrée ou de sortie traverse mécaniquement la plaque de fond sans interaction de fluide.

Selon un aspect de l'invention, les parois formant plaque de refroidissement sont formées par emboutissage puis assemblage.

Selon un aspect de l'invention, une plaque au moins est formée de deux parois ou demi-plaques assemblées entre elles pour délimiter entre elles une partie du circuit de fluide interne.

Selon un aspect de l'invention, une plaque au moins présente un raccord fluidique mâle respectivement femelle destinée à s'emboîter dans un raccord femelle respectivement mâle de l'organe structurel, de préférence brasage entre les raccords.

En variante, le raccord fluidique de la plaque avec l'organe structurel peut être réalisé mécaniquement avec un joint d'étanchéité. Ceci est plus simple en termes de procédé.

Selon un aspect de l'invention, le ou les organes structurels sont montés, notamment soudés ou vissés sur le boitier recevant les cellules de batterie.

L'invention sera mieux comprise et d'autres détails, caractéristiques et avantages de l'invention apparaîtront à la lecture de la description suivante faite à titre d'exemples non limitatifs en référence au dessin annexé dans lequel :
- la figure 1 illustre, schématiquement et partiellement, un système selon un exemple de l'invention,
- la figure 2 illustre, schématiquement et partiellement, le système de la figure 1 une fois assemblé.

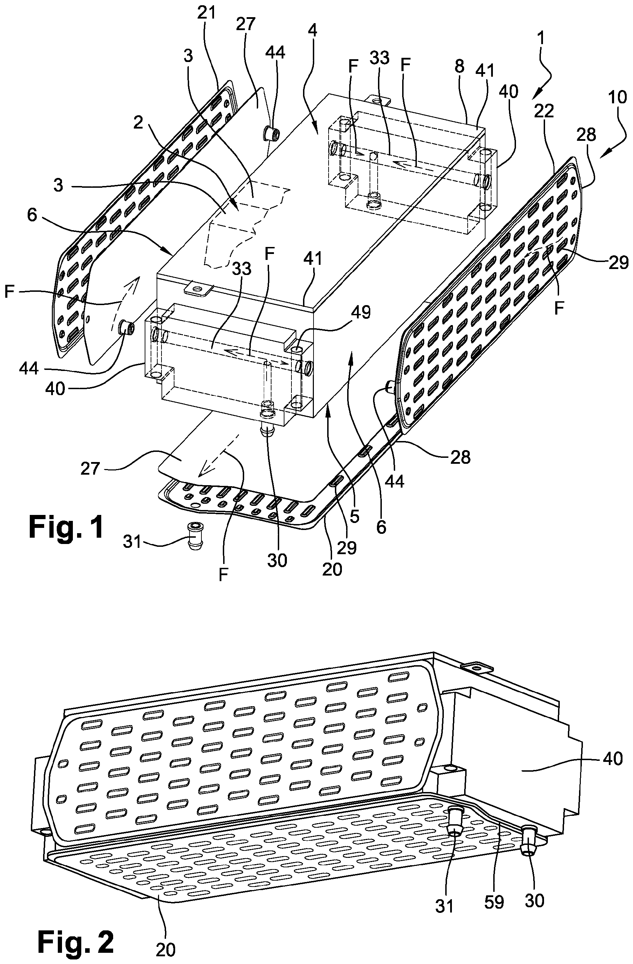

On a décrit sur la figure 1 un système de refroidissement pour module 2 de stockage d'énergie électrique, ce système comportant :
- un logement 4 agencé pour loger un module de stockage d'énergie électrique 2 comprenant plusieurs cellules 3 de batterie, ce logement 4 comprenant une face de fond 5 et deux faces latérales 6 sensiblement perpendiculaires à la face de fond 5, ces faces 6 se raccordant à la face 5,
- un circuit interne 10 de fluide caloporteur, dont des portions d'écoulement sont schématisés par des flèches F, ce circuit comprenant des plaques de refroidissement 20, 21 et 22 dans lesquelles peut circuler le fluide caloporteur, chacune de ces plaques étant en contact thermique respectivement avec l'une desdites faces 5 et 6 du logement 4 de manière à refroidir le module de stockage 2 lorsque celui-ci est placé dans le logement 4,
- deux raccords de fluide 30 et 31 agencés pour raccorder le circuit interne 10 de fluide caloporteur à un circuit de fluide caloporteur extérieur, non représenté, au système de refroidissement 1,
- un organe structurel 40 agencé pour réaliser une fonction mécanique, l'organe structurel étant agencé pour permettre la préhension du dispositif lors d'une manipulation de ce dispositif ou étant agencé pour permettre la fixation du dispositif sur le véhicule, cet organe structurel 40 étant distinct des plaques de refroidissement 20-22,
système dans lequel les raccords de fluide 30 et 31 sont montés sur l'élément structurel respectif 40, le raccord de fluide faisant partie intégrante de cet élément structurel.

Le fluide caloporteur utilisé est préférentiellement de l'eau glycolée, sans limitation du titre de glycol (0% à 100%). Alternativement le fluide caloporteur peut être choisi parmi les fluides d'appellation R134a, R1234yf ou R744.

Les cellules de batterie comprennent par exemple une pluralité de batteries au lithium-ion (Li-ion) pour une utilisation dans un véhicule hybride. Dans un autre mode de réalisation, la pluralité de cellules de batterie sont des batteries Li-ion pour une utilisation dans un véhicule électrique à batterie.

Le module de stockage 2 comporte un boitier 8 agencé pour recevoir les cellules de batterie 3 et lesdites faces de fond 5 et latérales 6 correspondent respectivement à une face de fond et une face latérale de ce boitier 8.

Le boitier est réalisé en matériau métallique, notamment de l'aluminium.

Le boîtier 8 peut être formé par des parois assemblées.

Dans une variante non illustrée, les plaques de refroidissement 20-22 du circuit de refroidissement sont au contact directement d'au moins une région d'une ou plusieurs cellules 3 de batterie lorsque le module de stockage d'énergie électrique est placé dans ledit logement. Dans ce cas, le module ne comporte pas de boitier pour les cellules de batterie.

Dans l'exemple décrit il est prévu trois plaques de refroidissement 20-22 dans lesquelles peut circuler le fluide caloporteur, chacune de ces plaques étant en contact respectivement avec l'une des faces 5 et 6 du module.

L'une de ces plaques de refroidissement 20 est la plaque de fond 5 et les deux autres plaques 21 et 22 sont sur deux faces 6 opposées du module de sorte que les trois plaques sont disposées en U.

Lorsqu'il est considéré le sens de l'écoulement du fluide caloporteur dans le circuit, les deux plaques latérales 21 et 22 sont disposées en amont de la plaque de fond 20. Ceci est visible grâce aux flèches F.

Les deux plaques latérales 21 et 22 sont disposées en parallèle, à savoir, lors de la circulation de fluide, le fluide caloporteur amené par un canal commun est séparé dans les deux plaques.

Lorsqu'il est considéré le sens de l'écoulement du fluide caloporteur dans le circuit, la plaque de fond 5 est disposée en série en aval des deux plaques latérales 6.

Les plaques de refroidissent 20-22 sont distinctes les unes des autres, à savoir elles sont réalisées de manière séparée.

Les plaques 20-22 comportent chacune une paroi plane 27 venant au contact du module de stockage d'énergie 2.

Les plaques 20-22 comportent une paroi 28 avec des aspérités 29 agencées pour perturber l'écoulement de fluide au sein de la plaque.

Les plaques 20-22 communiquent fluidiquement entre elles par l'intermédiaire de plusieurs canaux intermédiaires 33.

Ces canaux intermédiaires 33 sont formés sur les deux organes structurels 40

Ces canaux 33 forment un T dans chaque élément structurel.

Dans l'exemple décrit, l'organe structurel 40 d'entrée comprend un canal relié au raccord d'entrée 30 puis ce canal se divise en deux canaux qui vont chacun vers une plaque de refroidissement latérale.

L'organe structurel 40 sur la face opposée comprend deux canaux 33 chacun provenant d'une plaque de refroidissement via des raccords 44, puis ces deux canaux se rejoignent à un canal commun qui débouche sur la plaque de fond.

La forme en T des canaux est présente sur les deux organes structurels 40.

Le système 1 comporte ainsi deux organes structurels 40 sur deux faces opposées 41 du module 2, chaque organe structurel comprenant plusieurs canaux intermédiaires, notamment ces deux organes structurels sont identiques, notamment pour réduire la diversité des composants.

Les organes structurels 40 sont fixés sur des faces 41 du module qui sont libres de plaque de refroidissement, à savoir des faces sans plaques de refroidissement.

Les organes structurels 40 comporte un canal d'entrée 33 communiquant à une extrémité avec un raccord 44 et se divisant à l'autre extrémité en deux canaux qui débouchent chacun sur une plaque de refroidissement latérale 6.

Les plaques de refroidissement communiquent ainsi entre elles par l'intermédiaire de canaux 33 formés sur ces organes structurels 40.

L'un des organes structurels 40 comporte deux canaux 33 provenant chacun d'une plaque latérale, canaux qui se raccordent à un canal commun qui débouche sur la plaque de fond. C'est celui à l'arrière sur la figure 1.

Selon un aspect de l'invention, le circuit interne de fluide caloporteur 10 comporte un seul raccord d'entrée 30 et un seul raccord de sortie 31.

L'organe structurel comporte au moins passage 49 de vis ou tirant pour mettre la fixation du système 1sur le véhicule.

Selon un aspect de l'invention, l'organe structurel comporte un bloc usiné.

Selon un aspect de l'invention, le cas échéant, les plaques 20-22 ne sont pas liées mécaniquement entre elles directement, mais notamment sont fixées au boitier qui contient les cellules de batterie.

Selon un aspect de l'invention, l'organe structurel présente une superficie inférieure à la plaque de refroidissement, notamment au moins deux fois inférieure.

Comme par exemple visible sur la figure 2, le raccord 30 s'étend en dehors de la plaque de fond, qui présente un dégagement 59.

En variante, le raccord d'entrée 30 traverse mécaniquement la plaque de fond 5 sans interaction de fluide.

Les parois formant plaque de refroidissement sont formées par emboutissage puis assemblage.

Selon un aspect de l'invention, une plaque au moins est formée de deux parois ou demi-plaques assemblées entre elles pour délimiter entre elles une partie du circuit de fluide interne.

Selon un aspect de l'invention, une plaque au moins présente un raccord fluidique mâle 41 respectivement femelle destinée à s'emboîter dans un raccord femelle respectivement mâle de l'organe structurel, de préférence brasage entre les raccords.

Selon un aspect de l'invention, le ou les organes structurels 40 sont montés, notamment soudés ou vissés sur le boitier recevant les cellules de batterie.

Les plaques 20-22 sont par exemple en métal, notamment aluminium.

## Revendications

1. Système de refroidissement (1) pour module de stockage d'énergie électrique, ce système comportant :
- un logement (4) agencé pour loger un module (2) de stockage d'énergie électrique comprenant une ou plusieurs cellules de batterie, ce logement comprenant une face de fond (5) et au moins une face latérale (6) notamment perpendiculaire à la face de fond, de préférence ces faces se raccordant l'une à l'autre,
- un circuit interne (10) de fluide caloporteur comprenant au moins deux plaques de refroidissement (20-22) dans lesquelles peut circuler le fluide caloporteur, chacune de ces plaques étant en contact thermique respectivement avec l'une desdites faces du logement de manière à refroidir le module de stockage lorsque celui-ci est placé dans le logement,
- un raccord de fluide (310 ; 31) agencé pour raccorder le circuit interne de fluide caloporteur à un circuit de fluide caloporteur extérieur au système de refroidissement,
- un organe structurel (40) agencé pour réaliser une fonction mécanique, notamment l'organe structurel étant agencé pour permettre la préhension du dispositif lors d'une manipulation de ce dispositif ou étant agencé pour permettre la fixation du dispositif sur le véhicule, cet organe structurel étant distinct des plaques de refroidissement,
système dans lequel le raccord de fluide est monté sur cet élément structurel, notamment le raccord de fluide fait partie intégrante de cet élément structurel.

2. Système selon la revendication précédente, comportant le module de stockage d'énergie électrique, système dans lequel le module de stockage comporte un boitier (8) agencé pour recevoir le ou les cellules de batterie et lesdites faces de fond et latérale correspondent respectivement à une face de fond et une face latérale de ce boitier.

3. Système selon la revendication 1, dans lequel les plaques de refroidissement du circuit de refroidissement sont au contact directement d'au moins une région d'une ou plusieurs cellules de batterie lorsque le module de stockage d'énergie électrique est placé dans ledit logement.

4. Système selon l'une des revendications précédentes, dans lequel le circuit interne (10) de fluide caloporteur comprend au moins trois plaques de refroidissement (20-22), notamment exactement trois plaques, dans lesquelles peut circuler le fluide caloporteur, chacune de ces plaques étant en contact respectivement avec l'une des faces du module.

5. Système selon la revendication précédente, dans lequel l'une de ces plaques de refroidissement est la plaque de fond et les deux autres plaques sont sur deux faces opposées du module de sorte que les trois plaques sont disposées en U.

6. Système selon la revendication précédente, dans lequel, lorsqu'il est considéré le sens de l'écoulement du fluide caloporteur dans le circuit, les deux plaques latérales sont disposées en amont de la plaque de fond.

7. Système selon la revendication 5 ou 6, dans lequel es deux plaques latérales (6) sont disposées en parallèle, à savoir, lors de la circulation de fluide, le fluide caloporteur amené par un canal commun est séparé dans les deux plaques.

8. Système selon la revendication précédente, dans lequel lorsqu'il est considéré le sens de l'écoulement du fluide caloporteur dans le circuit, la plaque de fond (5) est disposée en série en aval des deux plaques latérales.

9. Système selon l'une des revendications précédentes, dans lequel le dispositif comporte deux organes structurels (40) sur deux faces opposées du module, chaque organe structurel comprenant un ou plusieurs canaux intermédiaires.

10. Système selon la revendication précédente, dans lequel l'un au moins des organes structurels comporte un canal d'entrée communiquant à une extrémité avec un raccord et se divisant à l'autre extrémité en deux canaux qui débouchent chacun sur une plaque de refroidissement latérale.

## Patentansprüche

1. Kühlsystem (1) für Modul zur Speicherung elektrischer Energie, wobei dieses System Folgendes aufweist:
- eine Aufnahme (4), die angeordnet ist, ein Modul (2) zur Speicherung elektrischer Energie aufzunehmen, das eine oder mehrere Batteriezellen umfasst, wobei diese Aufnahme eine Bodenfläche (5) und mindestens eine Seitenfläche (6), die insbesondere senkrecht zur Bodenfläche verläuft, umfasst, wobei diese Flächen vorzugsweise miteinander verbunden sind,
- einen inneren Wärmeübertragungsfluid-Kreislauf (10), der mindestens zwei Kühlplatten (20-22) umfasst, in denen das Wärmeübertragungsfluid zirkulieren kann, wobei jede dieser Platten jeweils mit einer der Flächen der Aufnahme in Wärmekontakt steht, um das Speicherungsmodul zu kühlen, wenn dieses in der Aufnahme platziert ist,
- ein Fluidanschlussstück (310; 31), das angeordnet ist, den inneren Wärmeübertragungsfluid-Kreislauf an einen Wärmeübertragungsfluid-Kreislauf außerhalb des Kühlsystems anzuschließen,
- ein Strukturorgan (40), das angeordnet ist, eine mechanische Funktion auszuüben, wobei insbesondere das Strukturorgan angeordnet ist, das Greifen der Vorrichtung bei einer Handhabung dieser Vorrichtung zu gestatten, oder angeordnet ist, die Befestigung der Vorrichtung am Fahrzeug zu gestatten, wobei dieses Strukturorgan von den Kühlplatten gesondert ist,
wobei in dem System das Fluidanschlussstück an diesem Strukturelement angebracht ist, das Fluidanschlussstück insbesondere fester Bestandteil dieses Strukturelements ist.

2. System nach dem vorhergehenden Anspruch, aufweisend das Modul zur Speicherung elektrischer Energie, wobei das Speicherungsmodul ein Gehäuse (8) aufweist, das angeordnet ist, die Batteriezelle(n) aufzunehmen, und die Boden- und Seitenfläche jeweils einer Boden- und Seitenfläche dieses Gehäuses entsprechen.

3. System nach Anspruch 1, wobei die Kühlplatten des Kühlkreislaufs mit mindestens einem Bereich einer oder mehrerer Batteriezellen direkt in Kontakt stehen, wenn das Modul zur Speicherung elektrischer Energie in der Aufnahme platziert ist.

4. System nach einem der vorhergehenden Ansprüche, wobei der innere Wärmeübertragungsfluid-Kreislauf (10) mindestens drei Kühlplatten (20-22) umfasst, insbesondere genau drei Platten, in denen das Wärmeübertragungsfluid zirkulieren kann, wobei jede dieser Platten jeweils mit einer der Flächen des Moduls in Kontakt steht.

5. System nach dem vorhergehenden Anspruch, wobei eine dieser Kühlplatten die Bodenplatte ist und sich die zwei anderen Platten auf zwei gegenüberliegenden Flächen des Moduls befinden, so dass die drei Platten U-förmig angeordnet sind.

6. System nach dem vorhergehenden Anspruch, wobei bei Betrachtung der Strömungsrichtung des Wärmeübertragungsfluids im Kreislauf die zwei Seitenplatten stromauf der Bodenplatte angeordnet sind.

7. System nach Anspruch 5 oder 6, wobei die zwei Seitenplatten (6) parallel angeordnet sind, und zwar bei der Zirkulation von Fluid das Wärmeübertragungsfluid, das von einem gemeinsamen Kanal zugeführt wird, in den zwei Platten getrennt wird.

8. System nach dem vorhergehenden Anspruch, wobei bei Betrachtung der Strömungsrichtung des Wärmeübertragungsfluids im Kreislauf die Bodenplatte (5) stromab der zwei Seitenplatten in Reihe angeordnet ist.

9. System nach einem der vorhergehenden Ansprüche, wobei die Vorrichtung zwei Strukturorgane (40) auf zwei gegenüberliegenden Flächen des Moduls aufweist, wobei jedes Strukturorgan einen oder mehrere Zwischenkanäle umfasst.

10. System nach dem vorhergehenden Anspruch, wobei mindestens eins der Strukturorgane einen Einlasskanal aufweist, der an einem Ende mit einem Anschlussstück in Verbindung steht und sich am anderen Ende in zwei Kanäle teilt, die jeweils an einer seitlichen Kühlplatte münden.

## Claims

1. Cooling system (1) for an electrical-energy storage module, this system comprising:
- a housing (4) designed to house an electrical-energy storage module (2) comprising one or more battery cells, this housing comprising a bottom face (5) and at least one lateral face (6) notably perpendicular to the bottom face, these faces preferably being connected to one another,
- an internal heat-transfer fluid circuit (10) comprising at least two cooling plates (20-22) through which the heat-transfer fluid can circulate, each of these plates being in thermal contact with a respective one of said faces of the housing so as to cool the storage module when the latter is placed in the housing,
- a fluid connector (310; 31) designed to connect the internal heat-transfer fluid circuit to a heat-transfer fluid circuit external to the cooling system,
- a structural member (40) designed to perform a mechanical function, the structural member notably being designed to allow the device to be grasped when this device is being handled or being designed to allow the device to be fixed to the vehicle, this structural member being distinct from the cooling plates,
in which system the fluid connector is mounted on this structural element, the fluid connector notably forming an integral part of this structural element.

2. System according to the preceding claim, comprising the electrical-energy storage module, in which system the storage module comprises a casing (8) designed to accept the battery cell or cells and said bottom and lateral faces correspond respectively to a bottom face and a lateral face of this casing.

3. System according to Claim 1, wherein the cooling plates of the cooling circuit are in direct contact with at least one region of one or more battery cells when the electrical-energy storage module is in place in said housing.

4. System according to one of the preceding claims, wherein the internal heat-transfer fluid circuit (10) comprises at least three cooling plates (20-22), notably exactly three plates, through which the heat-transfer fluid can circulate, each of these plates being in contact with a respective one of the faces of the module.

5. System according to the preceding claim, wherein one of these cooling plates is the bottom plate and the other two plates are on two opposite faces of the module, so that the three plates are arranged in a U.

6. System according to the preceding claim, wherein, when considered in the direction of flow of the heat-transfer fluid through the circuit, the two lateral plates are positioned upstream of the bottom plate.

7. System according to Claim 5 or 6, wherein the two lateral (6) plates are arranged in parallel, namely, when the fluid circulates, the heat-transfer fluid carried by a common duct is divided between the two plates.

8. System according to the preceding claim, wherein, when considered in the direction of flow of the heat-transfer fluid through the circuit, the bottom (5) plate is positioned in series with and downstream of the two lateral plates.

9. System according to one of the preceding claims, wherein the device comprises two structural members (40) on two opposite faces of the module, each structural member comprising one or more intermediate ducts.

10. System according to the preceding claim, wherein at least one of the structural members comprises an inlet duct communicating at one end with a connector, and at the other end splitting into two ducts which each open onto a lateral cooling plate.
